Europäisches Patentamt

European Patent Office

Office européen des brevets

(11) Publication number: **0 405 712 A2**

# EUROPEAN PATENT APPLICATION

(21) Application number: **90303760.4**

(22) Date of filing: **09.04.90**

(51) Int. Cl.5: **C08F 8/32, C02F 1/56**

(30) Priority: **30.06.89 US 374367**

(43) Date of publication of application:
**02.01.91 Bulletin 91/01**

(84) Designated Contracting States:
**AT BE CH DE DK ES FR GB GR IT LI LU NL SE**

(71) Applicant: **Diatec Polymers**
**1245 Paramount Drive**
**Batavia Illinois 60510(US)**

(72) Inventor: **Nakra, Geetanjali**
**739 Bloomfield**
**Aurora, Illinois 60504(US)**
Inventor: **Kane, James P.**
**2171 E. Sunspot Circle**
**Sandy, Utah 84095(US)**
Inventor: **Sortwell, Edwin Terrington**
**1519 Leabrook**
**Wheaton, Illinois 60187(US)**

(74) Representative: **Brown, David Leslie et al**
**Page & Co. Temple Gate House Temple**
**Gateate**
**Bristol BS1 6PL(GB)**

(54) **Protonated Mannich polymers.**

(57) Aqueous concentrates useful for the treatment of wastewaters and the like are formed by acidifying aminomethylated flocculants (Mannich polymers) prepared from acrylamide-containing polymers, secondary amines and formaldehyde. The protonated concentrates have a solids content in excess of one percent (1%) and are formed by the rapid addition of the acid component to the Mannich polymer. A preferred acid component comprises a mixture of an organic acid and mineral acid.

EP 0 405 712 A2

# PROTONATED MANNICH POLYMERS

## BACKGROUND OF THE INVENTION

The present invention relates to cationic flocculating agents utilized in removing suspended solids from liquids. More particularly, the present invention discloses acidified flocculating agents which are prepared by: i) reacting an acrylamide containing polymer with a secondary amine and formaldehyde (the Mannich reaction) to form a plurality of active, tertiary aminoalkyl groups along the backbone of the acrylamide polymer; and, ii) rapidly acidifying the resultant material, preferably with an organic/inorganic acid combination.

The use of aminomethylated polyacrylamide polymers as flocculating agents for waste water treatment and the like is well known. Commercial products of this type, generally referred to as Mannich polymers, are available in a variety of molecular weights and charge densities.

The relative size of polymer molecules in flocculant materials is typically expressed in terms of intrinsic viscosity rather than molecular weight, although the properties are related. Thus, for example, a Mannich polymer having an intrinsic viscosity of ten has a molecular weight of approximately 6,000,000; a Mannich polymer having an intrinsic viscosity of five has a molecular weight of approximately 2,000,000.

Polyacrylamide, itself, is substantially nonionic. The tertiary aminoalkyl groups formed as a result of the conversion of acrylamide groups during the Mannich reaction provide the cationic properties to the flocculant. The amount of charge on the Mannich polymer, in turn, is related to the number of acrylamide groups which have been converted to tertiary aminomethyl groups by the Mannich reaction. The extent of this conversion is referred to as the "charge density" of the resultant polymer.

For example, if a polyacrylamide material having an average of 100 acrylamide groups in each molecule is reacted with twenty-five percent of the stoichiometric amount of amine and formaldehyde, the resultant polymer will have a charge density related to the amount of resultant tertiary aminoalkyl (aminomethyl) groups -- approximately twenty-five percent. If a similar reaction is performed on a polyacrylamide having the same molecular weight (intrinsic viscosity) but utilizing an amount of secondary amine and formaldehyde equivalent to fifty percent of the acrylamide groups along the polymer backbone, the resultant polymer will have twice the charge density of the first (twentyfive percent) polymer. Regulating the charge density of the Mannich polymer allows the flocculant to be customized to balance the charge content (demand) of the particular water system being treated.

Mannich-type flocculating agents are generally sold as aqueous concentrates containing approximately one to twenty percent of the flocculant, typically between about 2 and 10% solids. Prior to use as a flocculating agent, the concentrate solution is further diluted with water to concentrations less than one percent (1%), generally less than about 0.5%.

Mannich polymer concentrates have a pH in the range of 10 - 11.5. Prior attempts to acidify such Mannich concentrates have resulted in a reduction in shelf life, limiting the useful properties of the Mannich flocculant concentrate to a matter of hours.

One problem associated with the use of Mannich flocculants is that the Mannich reaction is reversible. Thus Mannich polymers can deteriorate to yield formaldehyde, which is objectionable. (Current OSHA standards require a level of residual formaldehyde less than 1 ppm (8 hour time weighted average)). Moreover, even when 100% of the acrylamide groups on the molecule have been aminomethylated, the charge density of Mannich flocculants is less than other very high charge density polymer flocculants, e.g., polyethyleneimine (PEI). Thus, in applications which require high charge densities and relatively low intrinsic viscosities (for example, drainage in paper forming), Mannich polymers may not have sufficient charge density for the application.

The requirements for flocculants utilized in municipal wastewater treatment can vary dramatically. These varying demands are caused by one or more of the following parameters of the wastewater: pH, alkalinity, percentage volatiles and percent of aerobically digested materials. Although conventional Mannich and other cationic flocculants often perform well in wastewater systems having moderate pH, low volatiles, and low levels of aerobically digested sludges, these flocculants are less satisfactory for wastewater systems of relatively high pH, or having a high percentage of volatiles, or containing high levels of aerobically digested sludges.

British Published Patent Specification 1,572,386 published July 30, 1980 discloses a Mannich type flocculating agent having an acid pH. However, this patent reference teaches that the acid should be added to the Mannich solution only after the material has been diluted to less than 1 percent solids, most preferably less than .25 percent solids. Thus, the acid addition step disclosed in the British patent is performed immediately prior to use. The material employed by the British patent for the acidification step is a mineral acid, preferably sulfuric acid.

## SUMMARY OF THE INVENTION

The present invention discloses acidified (protonated) Mannich polymers which exhibit improved performance and which have stabilities greater than standard, basic Mannich flocculants. The products of the present invention exhibit better performance in waste water systems and paper forming drainage applications where higher charge demand exists. These novel compositions have lower residual formaldehyde (less than 1 ppm) and exhibit greater product stability and shelf life than even the standard, basic Mannich products. That is, the protonated flocculants are more stable and have a lesser tendency to undergo reversion to form polyacrylamide, secondary amine and formaldehyde. Additionally, the protonated aminomethylated polymers of the present invention exhibit superior performance in industrial and municipal wastewaters and sludges having demanding contaminants presenting high pH, high alkalinity, a high percentage of volatiles or having a high percentage of aerobically digested sludge content.

The Mannich flocculants of the present invention are preferably substantially linear and can be made by utilizing commercially available, water soluble polyacrylamides having intrinsic viscosities in the range of about 0.1 to about 19. Alternatively, the polyacrylamide (or polymethacrylamide) starting materials can be made by forming a reaction mixture containing acrylamide monomer or methacrylamide monomer (if a homopolymer is desired) or both acrylamide monomer and methacrylamide monomer (if a copolymer is desired) in the presence of a free radical catalyst. By varying the amount and type of catalyst and the time of reaction, polymers of varying intrinsic viscosities can be formed. Methods of forming polyacrylamide and polymethacrylamide polymers are well known in the art.

At least a portion of the amide groups on the polyacrylamide polymer are then aminomethylated in a Mannich reaction utilizing formaldehyde and a secondary amine. The preferred secondary amine is dimethylamine but other secondary amines may also be used, including, diethylamine, methylethylamine, piperidine, di-(betahydroxyethyl)amine, hydroxyethylmethylamine, dibutylamine, pyrrolidine, diethanolamine and diallyl amine. Procedures for forming such Mannich products are described in U.S. Patent No. 3,328,901; British Patent Specification 1,572,386; and, Schiller and Suen, Industrial Engineering Chemistry , Volume 48, No. 12, pp. 2132-37 (1956).

As noted previously, it may be desirable to aminomethylate less than all of the available acrylamide groups in the polyacrylamide reactant. The amount of aminomethylation can be regulated by adjusting either the amount of secondary amine or the amount of formaldehyde in the Mannich reaction mixture. It is generally desirable to convert between ten and one hundred percent of the available amide groups, depending on the charge demand of the water system to be treated.

In accordance with one aspect of the present invention, the Mannich polymer is then acidified (protonated) by the rapid addition of a quantity of an organic acid which is substantially stoichiometrically equivalent to the tertiary aminoalkyl content of the Mannich solution. Preferred organic acids include formic, acetic and propionic, but other water-soluble organic acids may be employed. Addition of the organic acid serves to reduce the pH of the Mannich flocculant solution from approximately 10.5 to approximately 6.5. If left in this range, the flocculant will rapidly deteriorate and crosslink. In order to ensure the stability of the acid flocculant, it is necessary to further reduce the pH of the system to less than about 4.5, preferably to a pH range of between about 3.0 to about 3.5. This can be accomplished by use of a mineral acid. Although the nature of the mineral acid is not critical, hydrochloric acid and sulfuric acid are especially preferred.

Alternatively, the Mannich polymer can be acidified to form a concentrate having a pH of less than 4.5 by the use of a mineral acid alone. Although such acidified polymers exhibit good flocculant properties, the use of a mixed organic/mineral acid system is preferred.

Rapid mixing of the acid component(s) and the Mannich polymer is important in order to avoid crosslinking and polymer deterioration. A preferred method of acid addition is to inject a mixture of the organic and the mineral acids into a proportionated stream of the Mannich polymer through metering and mixing devices so that the pH of the polymer is reduced to less than 4.5 substantially instantaneously.

In a preferred embodiment, a compound of the formula RM or $R_2M$ where R is methyl, ethyl, propyl or butyl, and M is selected from the group consisting of sulfate, sulfite, chloride, bromide, iodide, nitrate, nitrite and carbonate can be employed in the acidified Mannich flocculant composition. Dimethyl sulfate and methyl chloride are preferred water-soluble materials. Even a small amount of such a compound will improve the stability of the system. We have found that the system is improved when the amount of compound comprises less than 0.1 equivalents based on the tertiary aminomethyl groups in the Mannich product. An optimal level of the compound is approximately 0.02 equivalents, i.e., 2.0 mole% of the tertiary aminomethyl groups.

## DETAILED DESCRIPTION OF THE INVENTION

The nature of the present invention is further illustrated in the following examples with further reference, in the case of Examples 4-6, to the appended drawings wherein:

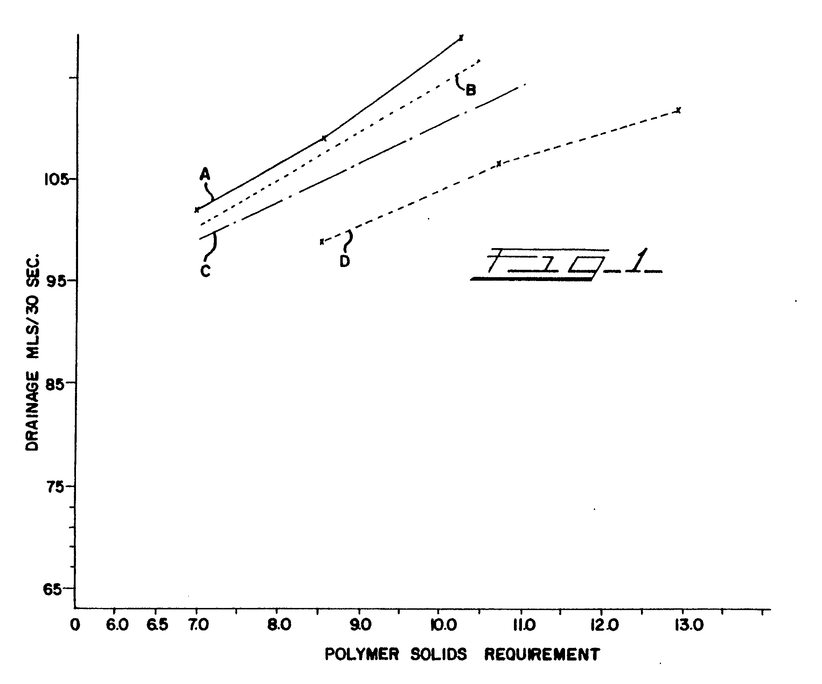

FIGURE 1 depicts the drainage performance of four flocculant compositions used to treat wastewater from a papermill. Curve A represents a 30 mole % acid Mannich prepared in accordance with the present invention wherein the pH has been adjusted with a mixture of a mineral acid and acetic acid. Curve B represents a 30 mole % acid Mannich polymer prepared in accordance with the present invention wherein the pH has been adjusted with hydrochloric acid only. Curve C represents a 30 mole % acid Mannich polymer prepared in accordance with the present invention wherein the pH has been adjusted with sulfuric acid only. Curve D represents a 90 mole % aminomethylated polyacrylamide (a prior art composition). The compositions illustrated at Curves A, B and C were at 3.2% polymer solids; the composition of Curve D was at 4.0% polymer solids.

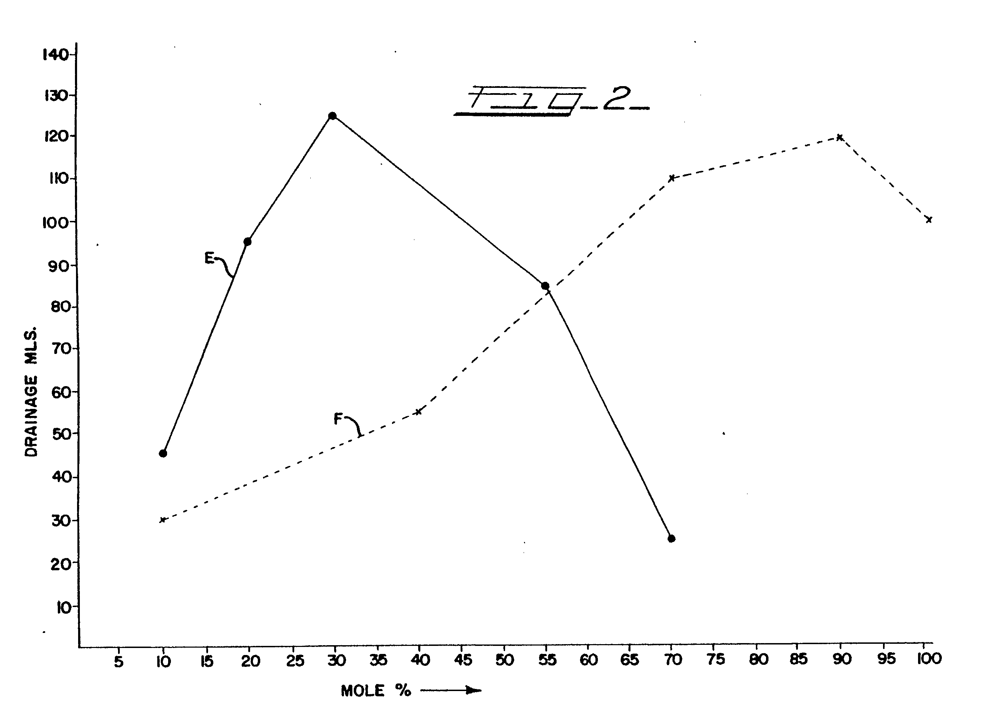

FIGURE 2 compares drainage rate as a function of percent aminomethylation for both acid Mannich polymers prepared in accordance with the present invention and for conventional Mannich polymers when these flocculant compositions were applied to samples taken from the same municipal wastewater source. Curve E represents acid stabilized Mannich polymers prepared in accordance with the present invention wherein the polymers have several different degrees of aminomethylation. Curve F illustrates conventional, basic Mannich polymers having percent aminomethylation ranging from 10 to 100 percent.

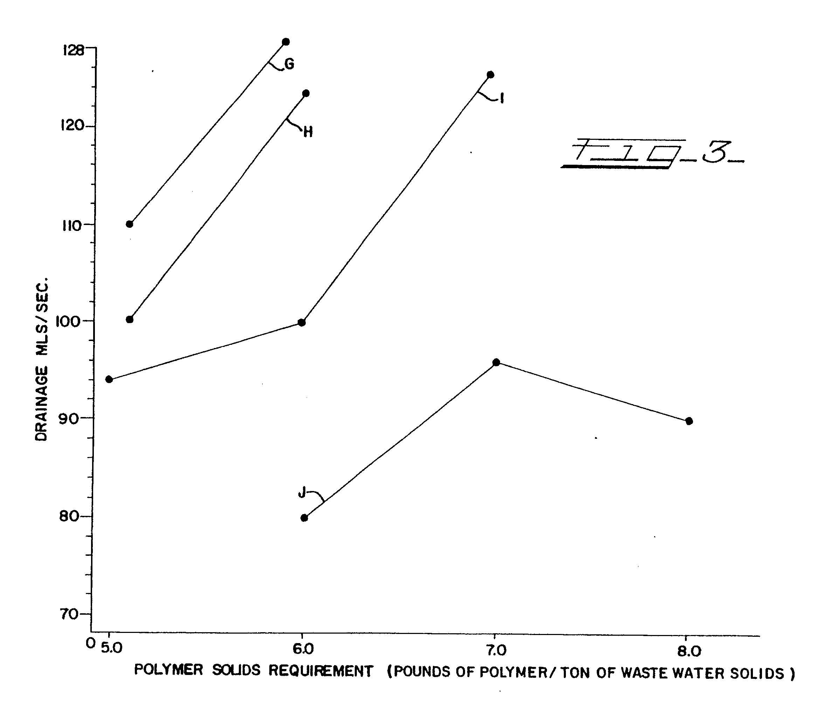

FIGURE 3 graphs drainage rate as a function of polymer solids for: i) two acidic flocculent compositions prepared in accordance with the present invention (Curves G and H); and ii) two conventional aminomethylated acrylamide polymers (Curves I and J).

## EXAMPLE 1

500 grams of an aqueous solution containing 2.219% polyacrylamide and having an intrinsic viscosity of twelve (IV 12) was heated to 85° F. To this heated polyacrylamide solution were added 12.3 grams of an aqueous solution of dimethylamine (60%) and 12.6 grams of an aqueous solution of formaldehyde (37%). The above Mannich reaction mixture was maintained at a pH of about 10.2 to 10.5 and a temperature of about 90° F for a period of 9 hours. The resultant material was substantially 100% aminomethylated and had a solids content of approximately 4%.

The above Mannich solution was divided into five 100 milliliter aliquots:

Aliquot A was acidified with sulfuric acid by rapidly adding 3.6 grams of sulfuric acid and 4.5 grams of water to the 100 gram Mannich solution;

Aliquot B was acidified with hydrochloric acid by rapidly adding 3.2 grams of hydrochloric acid and 4.7 grams of water to the 100 gram Mannich solution;

Aliquot C was acidified with a mixture of hydrochloric acid and acetic acid by rapidly adding 0.98 grams of acetic acid, 2.6 grams of hydrochloric acid and 4.7 grams of water to the 100 gram Mannich solution;

Aliquot D was acidified with sulfuric acid and acetic acid by rapidly adding 0.98 grams of acetic acid, 2.9 grams sulfuric acid and 4.7 grams of water to the 100 gram sample; and,

Aliquot E was prepared in the same manner as Aliquot D, but an additional 0.08 grams (2 mole%) of dimethylsulfate was added to the sample.

The five treated aliquots and a sample of a commercially-available Mannich polymer Diatec 4300, Diatec Polymers, Batavia, Illinois) were stored at 40° C for a period of 25 days and were periodically tested for both charge density and intrinsic viscosity. The results of the tests are set out in Table 1. A loss of charge density and an increase in viscosity signifies degradation (crosslinking) of the polymer.

The results indicate that the mixed organic/inorganic acid solutions were superior in stability both to the mineral acid treated Mannich polymers and to the conventional, basic Mannich polymer control. The results also indicate that the addition of a small amount (2%) of the compound, dimethylsulfate, further stabilized the flocculant solution.

TABLE 1

| STABILITY STUDIES -- CHANGE IN VISCOSITY AND CHARGE DENSITY OVER TIME | | | | | | |
|---|---|---|---|---|---|---|
| | **DAYS** | | | | | |
| **POLYMER:*** | **1** | **5** | **10** | **15** | **20** | **25** |
| ~100 mole% aminomethylated (conventional basic Mannich) | | | | | | |
| C.Eqv | 5.8 | 5.6 | 5.2 | 5.0 | 4.8 | 4.7 |
| viscosity | 30K | 32K | 40K | 45K | 59K | 65K |
| A: ~100 mole% acidified Mannich with sulfuric acid | | | | | | |
| C.Eqv | 5.8 | 5.6 | 5.3 | 5.1 | 5.0 | 5.0 |
| viscosity | 20K | 32K | 39K | 44K | 49K | 53K |
| B: ~100 mole% acidified Mannich w/ hydrochloric acid | | | | | | |
| C.Eqv | 5.8 | 5.6 | 5.5 | 5.3 | 5.1 | 5.1 |
| viscosity | 20K | 30K | 38K | 42K | 48K | 55K |
| C: ~100 mole% acidified Mannich with sulfuric and acetic acid | | | | | | |
| C.Eqv | 5.8 | 5.6 | 5.5 | 5.4 | 5.2 | 5.2 |
| viscosity | 20K | 25K | 32K | 35K | 42K | 45K |
| D: ~100 mole% acidified Mannich w/ hydrochloric acid and acetic acid | | | | | | |
| C.Eqv | 5.8 | 5.6 | 5.5 | 5.4 | 5.2 | 5.2 |
| viscosity | 21K | 26K | 33K | 35K | 41K | 43K |
| E: ~100 mole% acidified Mannich with sulfuric acid, acetic acid and 2 mole% DMS | | | | | | |
| C.Eqv | 5.8 | 5.7 | 5.7 | 5.7 | 5.6 | 5.6 |
| viscosity | 20K | 23K | 26K | 29K | 35K | 38K |

* IV for all polymers = 12; C.Eqv = colloidal equivalent (milli-equivalents of charge per gram of polymer); viscosity is in centipoise, measured with Brookfield Viscometer, spindle 5 @ 12 RPM @ 25°C.

## EXAMPLE 2

A series of protonated samples of a substantially 100% aminomethylated Mannich reaction product having an intrinsic viscosity of 12 were formed in the same manner as Aliquots A, B, C, and D of Example 1. These four samples and a control comprising a commercially-available substantially 100 mole% aminomethylated Mannich polymer (Diatec 4300) were sent to a commercial laboratory for measurement of formaldehyde content in accordance with procedure NIOSH, 125-1.

The results of the analysis are set forth in Table 2. The data show that samples treated with mixed organic/mineral acid were significantly lower in residual formaldehyde than the conventional Mannich polymer.

TABLE 2

| FORMALDEHYDE ANALYSIS | |
|---|---|
| Sample Description* | Residual formaldehyde |
| Conventional Mannich Control, ~100 Mole% | 3.00 ppm |
| Acidified ~100 Mole% Mannich with Sulfuric Acid | 1.40 ppm |
| Acidified ~100 Mole% Mannich with Hydrochloric Acid | 0.97 ppm |
| Acidified ~100 Mole% Mannich with Hydrochloric Acid and Acetic Acid | 0.85 ppm |
| Acidified ~100 Mole% Mannich with Sulfuric Acid and Acetic Acid | 0.65 ppm |

* All samples substantially 100% aminomethylated; IV = 12.

## EXAMPLE 3

A series of lower molecular weight polyacrylamide polymers having intrinsic viscosities of 2.7, 1.0, 0.7 and 0.4 were treated with stoichiometric amounts of dimethylamine and formaldehyde in accordance with the procedure of Example 1 to form ~100% aminomethylated products. A portion of each of the four low IV Mannich samples was further treated with acetic acid and sulfuric acid in accordance with the general procedure specified for Aliquot D of Example 1 to form acid Mannich products, thereby resulting in both basic and acid-modified counterparts for each of the low IV materials.

Each of the foregoing samples, and a polyethyleneimine (PEI) control, was tested for drainage rate by utilizing a paper stock, as may be used in the formation of paper boxboard, comprising cellulosic fibers and other additives dispersed in water. The procedure employed was as follows:

1. An amount of flocculant polymer was dispersed in 4 liters of paper stock in a large beaker and mixed to a constant consistency;

2. A filter leaf having one end connected to a vacuum source was placed face-down in the paper stock, gently moving the leaf up and down to prevent settling of flocculant materials. This process was continued for a total of 20 seconds;

3. After 20 seconds of vacuum filtering, the filter leaf was removed from the beaker, and placed, face-up, on a ring stand while maintaining the vacuum for 10 seconds. The vacuum was then removed; and,

4. The amount of filtrate water collected during the 30 second period was measured.

The data from this experiment are recorded in Table 3. The data show that each of the acid Mannich materials achieved equal or better drainage rates than its standard, basic Mannich counterpart, at substantially lower polymer loadings. The data also show that a relatively low molecular weight acid Mannich material (IV 0.3) at a loading of 0.7 pounds per ton produced results comparable to the polyethyleneimine control at a loading of 1.0 pounds per ton. The IV 2.7 acid Mannich gave even higher drainage rates at a dosage of only 0.2 pounds per ton. Quite often, the dosage of PEI in paper board production must be increased because of its low molecular weight. Table 3 illustrates that this limitation does not exist with acid Mannich polymers produced in accordance with the present invention. Also, it is well recognized in the art that the molecular weight of the flocculant polymer plays a significant role in the drainage phenomenon. This effect can be seen in Table 3 in the reduction of polymer required as the molecular weight of the acid Mannich is increased.

TABLE 3

| PAPER BOARD DRAINAGE | | |
|---|---|---|
| | Polymer Active lbs/ton* | Drainage mls/30 sec. |
| Polyethylene imine (IV 0.3) | 1.0 | 122 |
| Mannich (IV 0.4) | 3.2 | 122 |
| Acid Mannich (IV 0.3) | 0.7 | 122 |
| Mannich (IV 0.7) | 3.1 | 122 |
| Acid Mannich (IV 0.7) | 0.5 | 130 |
| Mannich (IV 1.0) | 3.0 | 122 |
| Acid Mannich (IV 1.0) | 0.4 | 128 |
| Mannich (IV 2.7) | 3.0 | 122 |
| Acid Mannich (IV 2.7) | 0.2 | 134 |

\* Pounds of flocculant utilized per ton of sludge solids; all Mannich flocculants ~100% aminomethylated; IV = intrinsic viscosity.

## EXAMPLE 4

A) Following the general procedure of Example 1, an aqueous solution of polyacrylamide having an intrinsic viscosity of twelve (IV 12) was aminomethylated with sufficient dimethylamine and formaldehyde to react with 30% of the acrylamide groups on the polymer.

Three aliquots of the resulting thirty mole% Mannich material were rapidly protonated with acid in the same manner as aliquots A, B and D of Example 1, forming: i) a Mannich polymer adjusted to a pH of 3 with sulfuric acid only (i.e., no organic acid); ii) a Mannich polymer adjusted to a pH of 3 with hydrochloric acid (no organic acid); and, iii) an acid Mannich polymer in which a stoichiometric amount of acetic acid was rapidly added to the polymer, followed by adjustment of the pH to 3 by the rapid addition of a mineral acid, viz , sulfuric acid. The resultant acid Mannich concentrates had solids content of approximately 3.2%.

Dilute solutions of the above concentrates were formed by diluting 15.6 grams of the concentrate to 100 mls with water. A conventional, basic Mannich concentrate having an intrinsic viscosity of twelve, a solids content of four percent, but having approximately ninety percent of the available acrylamide groups aminomethylated (Diatec 4390) was employed as a control. 12.5 grams of the control polymer solution were diluted to 100 mls with water prior to testing.

Each of the above samples was added to identical municipal wastewater samples. Such wastewaters often have high charge demands and customarily require flocculants requiring elevated charge densities.

B) The performance of the sample flocculant materials was evaluated by filtering the flocculant-treated samples, and measuring the volume of water which passed through the filter in a constant time interval. Pursuant to the testing procedure, 10 milliliters of the diluted polymer solutions prepared from Mannich concentrates were added to 250 milliliter samples of wastewater in a series of 500 milliliter mixing cylinders and stirred until the consistency was constant. Each of the treated samples was poured through a Buechner funnel and was permitted to drain for 30 seconds. The data resulting from the test are collected in Table 4.

FIGURE 1 is a graphic illustration of the performance data set forth in Table 4. Although all of the curves showed an increase in the rate of drainage when the level of active polymer was increased, the three 30% acid Mannich polymers (Curves A-C) outperformed the 90% standard Mannich polymer (Curve D), notwithstanding their lesser initial charge density. The data also show that the organic/ mineral acid combination (Curve A) outperformed all of the other systems tested, requiring substantially less flocculant to achieve the same drainage rate as the other Mannich flocculants, as well as the highest absolute drainage rate.

7

EP 0 405 712 A2

TABLE 4

| Flocculant Type | Polymer Actives #/ton* | Drainage mls/30 sec. |
|---|---|---|
| 30 mole% | 7.0 | 102 |
| Acid Mannich | 8.5 | 109 |
| (Acetic Stabilized sulfuric acid) | 10.2 | 119 |
| 30 mole% | 9.0 | 100 |
| Acid Mannich | 8.5 | 108 |
| (Hydrochloric) | 10.2 | 116 |
| 30 mole% | 7.0 | 99 |
| Acid Mannich | 8.5 | 105 |
| (Sulfuric) | 10.2 | 113 |
| 90 mole% | 8.5 | 99 |
| Mannich** | 10.7 | 105 |
| (Conventional, basic) | 12.9 | 112 |

* Polymer actives expressed as pounds of flocculant/ton of wastewater solids; all flocculants had an intrinsic viscosity of 12.
** Diatec 4390, Diatec Polymers, Batavia, Illinois.

## EXAMPLE 5

Quantities of an aqueous solution of polyacrylamide having an intrinsic viscosity of twelve (IV 12) were placed in eight separate reaction flasks. To each of the reaction flasks was added an amount of dimethylamine and formaldehyde sufficient to form 10%, 20%, 30%, 40%, 50%, 70%, 90% and 100% aminomethylated Mannich flocculants.

The 20%, 30% and 50% aminomethylated materials, as well as portions of the 10% and 70% aminomethylated materials were further treated with acetic acid and sulfuric acid in accordance with the general procedure of Example 1, Aliquot D.

Portions of the foregoing Mannich polymers were utilized to treat a municipal wastewater and the drainage rate was determined by following the filtering procedure set out at part B of Example 4. The results of the treatment are tabulated in Table 5 and are graphically depicted in FIGURE 2.

The data illustrate that an acidified, 30% aminomethylated Mannich flocculant was superior to a conventional, 90% aminomethylated standard Mannich in treating this wastewater system. The data also illustrate the fact that exceeding the charge demand of the wastewater by employing Mannich polymers having excessive charge densities results in a decrease in performance of the flocculant compositions with both acid and standard Mannich polymers.

8

## TABLE 5

| Drainage Rate For Municipal Waste Water Treated With 10 Pounds Flocculant/Ton Of Solids | |
| --- | --- |
| %Aminoalkylation of Polyacrylamide | Drainage mls/30 sec |
| 10S* | 30 |
| 10A | 45 |
| 20A | 95 |
| 30A | 125 |
| 40S | 55 |
| 50A | 55 |
| 70S | 110 |
| 70A | 25 |
| 90S | 120 |
| 100S | 100 |

\* S = Standard (non-acidified Mannich; A = Mannich acidified with acetic/sulfuric acids; IV of all polymers was 12.

## EXAMPLE 6

A) A conventional, basic Mannich flocculant having an IV of 12 and approximately 40% of its available acrylamide groups aminomethylated was utilized to treat a midwestern United States municipal wastewater at three different levels of polymer solids per ton of wastewater solids, following the procedure of Part B of Example 4. The results were as follows:

| Polymer Actives lbs/ton | Drainage mls/30 sec |
| --- | --- |
| 5 | 94 |
| 6 | 100 |
| 7 | 126 |

B) The same Mannich polymer was rapidly acidified with a quantity of acetic acid which was stoichiometrically equivalent to the polymer's tertiary aminomethyl content, followed by treatment with sufficient sulfuric acid to adjust the pH to between 3.0 and 3.5.

Following the procedure of Part B of Example 4, the acidified polymer was used to treat the same midwestern United States municipal wastewater at four different levels, with the following results:

| Polymer Actives lbs/ton | Drainage mls/30 sec |
|---|---|
| 3.45 | 56 |
| 4.60 | 100 |
| 5.20 | 110 |
| 5.80 | 127 |

C) A conventional, basic Mannich flocculant having an IV of 12 and approximately 50% of its available acrylamide groups aminomethylated was utilized to treat the same municipal wastewater used in Part A hereof, at three different levels of polymer solids per ton of wastewater solids, again following the procedure of Part B of Example 4. The results were as follows:

| Polymer Actives lbs/ton | Drainage mls/30 sec |
|---|---|
| 5 | 80 |
| 6 | 96 |
| 7 | 90 |

D) The same Mannich polymer was rapidly acidified with a quantity of acetic acid which was stoichiometrically equivalent to the polymer's tertiary aminomethyl content, followed by treatment with sufficient sulfuric acid to adjust the pH to between 3.0 and 3.5.

Following the procedure of Part B of Example 4, the acidified polymer was used to treat the same municipal wastewater at four different levels, with the following results:

| Polymer Actives lbs/ton | Drainage mls/30 sec |
|---|---|
| 4.50 | 66 |
| 5.25 | 100 |
| 6.00 | 123 |

The results of these tests are set out in FIGURE 3. The data show that the two acid Mannich polymers outperformed their standard, basic Mannich counterparts.

**Claims**

1. An aqueous, acidic flocculant concentrate comprising the following rapidly-mixed components:

A. at least 1% by weight of a tertiary aminoalkyl group containing product formed by the Mannich reaction of:

1. a polymer selected from the group consisting of polyacrylamide, polymethacrylamide and copolymers of acrylamide and methacrylamide;

2. a secondary amine; and

3. formaldehyde;

B. a quantity of mineral acid sufficient to adjust the pH of said flocculant concentrate to less than about 4.5; and

C. water.

2. An aqueous, acidic flocculant concentrate comprising:

A. at least 1% by weight of a tertiary aminoalkyl group containing product formed by the Mannich reaction of:

    1. a polymer selected from the group consisting of polyacrylamide, polymethacrylamide and copolymers of acrylamide and methacrylamide;

    2. a secondary amine; and

    3. formaldehyde;

B. an acid component, comprising:

1. a quantity of organic acid substantially stoichiometrically equivalent to the tertiary aminoalkyl groups in the Mannich reaction product; and

2. a quantity of mineral acid sufficient to adjust the pH of said flocculant concentrate to less than about 4.5;

wherein said acid component and said tertiary aminoalkyl group product have been rapidly mixed together; and

C. water.

3. The flocculant concentrate of claims 1 or 2 further including a compound of the formula:

RM or R$_2$M

where R is methyl, ethyl, propyl or butyl, and M is selected from the group consisting of sulfate, sulfite, chloride, bromide, iodide, nitrate, nitrite and carbonate.

4. The flocculant concentrate of claim 3 wherein the amount of said compound comprises less than 0.1 equivalents of the tertiary aminomethyl groups in the Mannich product.

5. The flocculant concentrate of claims 1 or 2 wherein said tertiary aminoalkyl group containing product comprises between 2% and 20% by weight of said concentrate.

6. The flocculant concentrate of claim 2 wherein said organic acid comprises acetic acid.

7. The flocculant concentrate of claims 1 or 2 wherein said mineral acid is selected from the group consisting of sulfuric acid and hydrochloric acid.

8. The flocculant concentrate of claims 1 or 2 wherein the amount of tertiary aminoalkyl groups in said concentrate comprises between 10% and 100% of the acrylamide groups on said polymer.

9. The flocculant concentrate of claims 1 or 2 wherein the acrylamide group containing polymer has an intrinsic viscosity of about 0.1 to about 19.

10. The method of forming an aqueous, acid flocculant concentrate comprising the following steps:

A. forming an aqueous solution containing at least 1% of a water-soluble Mannich polymer formed by the reaction of:

    1. a polymer selected from the group consisting of polyacrylamide, polymethacrylamide and copolymers of acrylamide and methacrylamide;

    2. a secondary amine; and

    3. formaldehyde;

B. rapidly adding an amount of organic acid to said aqueous solution which is substantially stoichiometrically equivalent to the tertiary aminoalkyl groups in the Mannich reaction product; and,

C. adjusting the pH of said flocculant concentrate to a pH of less than about 4.5 by the rapid addition of mineral acid to said concentrate.

11. The method of reducing the reversion of an aqueous, tertiary aminoalkyl group containing Mannich polymer flocculant prepared by reacting: a) a polymer selected from the group consisting of polyacrylamide, polymethacrylamide and copolymers of acrylamide and methacrylamide; b) a secondary amine; and, c) formaldehyde; comprising

adjusting the pH of said Mannich polymer flocculant to less than 4.5 by the rapid addition of an acid component.

12. A method of increasing the reactivity of an aqueous, tertiary aminoalkyl group containing Mannich polymer flocculant prepared by reacting: a) a polymer selected from the group consisting of polyacrylamide, polymethacrylamide and copolymers of acrylamide and methacrylamide; b) a secondary amine; and, c) formaldehyde; comprising:

adjusting the pH of said Mannich polymer flocculant to less than 4.5 by the rapid addition of an acid component.

13. A method of employing aminomethylated polyacrylamides for the treatment of waters having one or more contaminants selected from the group consisting of: a) high pH materials; b) materials having high alkalinity; c) materials having high percent volatiles; and, d) materials having a high percentage of aerobically digested sludge; said method comprising:

adjusting the pH of said Mannich polymer flocculant to less than 4.5 by the rapid addition of an acid component.

14. The method of claims 11, 12, or 13 wherein said acid component comprises:

i) an amount of organic acid which is substantially stoichiometrically equivalent to the tertiary aminoalkyl groups in said Mannich polymer; and

ii) an amount of mineral acid which is sufficient, in combination with said organic acid, to adjust the pH of said flocculant to less than 4.5.

15. The method of claims 10, 11, 12, 13 or 14 wherein said Mannich polymer comprises between about 2% and about 20% of said aqueous solution.

16. Use, for enhancing performance and/or stabilising against crosslinking and/or reversion an aqueous tertiary aminoalkyl group containing Mannich polymer flocculant, of an acid component in an amount capable of adjusting the pH of said Mannich polymer flocculant to less than 4.5.

17. Use of a compound of the formula:

RM or $R_2M$

where R is methyl, ethyl, propyl or butyl, and M is selected from the group consisting of sulfate, sulfite, chloride, bromide, iodide, nitrate, nitrite and carbonate, for stabilising an aqueous, tertiary aminoalkyl group containing Mannich polymer flocculant.

Claims for the following Contracting State: ES

1. A method of forming an aqueous, acidic flocculant concentrate, comprising the following steps:

A. forming an aqueous solution containing at least 1% of a water-soluble Mannich polymer formed by the reaction of:

1. a polymer selected from the group consisting of polyacrylamide, polymethacrylamide and copolymers of acrylamide and methacrylamide;

2. a secondary amine; and

3. formaldehyde;

B. rapidly adding an amount of organic acid to said aqueous solution which is substantially stoichiometrically equivalent to the tertiary aminoalkyl groups in the Mannich reaction product; and

C. adjusting the pH of said flocculant concentrate to a pH of less than about 4.5 by the rapid addition of mineral acid to said concentrate.

2. A method of forming an aqueous, acidic flocculant concentrate comprising the following steps:

A. forming an aqueous solution containing at least 1% of a water-soluble Mannich polymer formed by the reaction of:

1. a polymer selected from the group consisting of polyacrylamide, polymethacrylamide and copolymers of acrylamide and methacrylamide;

2. a secondary amine; and

3. formaldehyde; and

B. rapidly adding an acid component comprising:

1. a quantity of organic acid substantially stoichiometrically equivalent to the tertiary aminoalkyl groups in the Mannich reaction product; and

2. a quantity of mineral acid sufficient to adjust the pH of said flocculant concentrate to less than about 4.5.

3. The method of claim 1 or 2, wherein there is further present a compound of the formula:

RM or $R_2M$

where R is methyl, ethyl, propyl or butyl, and M is selected from the group consisting of sulfate, sulfite, chloride, bromide, iodide, nitrate, nitrite and carbonate.

4. The method of claim 3 wherein the amount of said compound comprises less than 0.1 equivalents of the tertiary aminomethyl groups in the Mannich product.

5. The method of any one of the preceding claims wherein said Mannich polymer comprises between 2% and 20% by weight of said concentrate.

6. The method of any one of the preceding claims wherein said organic acid comprises acetic acid.

7. A modified method of any one of claims 1 to 5 wherein the organic acid is omitted.

8. The method of any one of the preceding claims wherein said mineral acid is selected from the group consisting of sulfuric acid and hydrochloric acid.

9. The method of any one of the preceding claims wherein the amount of tertiary aminoalkyl groups in said concentrate comprises between 10% and 100% of the acrylamide groups on said polymer.

10. The method of any one of the preceding claims wherein the acrylamide group containing polymer has an intrinsic viscosity of about 0.1 to about 19.

11. A method of reducing the reversion of an aqueous, tertiary aminoalkyl group containing Mannich polymer flocculant prepared by reacting: (a) a polymer selected from the group consisting of

12

polyacrylamide, polymethacrylamide and copolymers of acrylamide and methacrylamide; (b) a secondary amine; and, (c) formaldehyde; comprising
adjusting the pH of said Mannich polymer flocculant to less than 4.5 by the rapid addition of an acid component.

12. A method of increasing the reactivity of an aqueous, tertiary aminoalkyl group containing Mannich polymer flocculant prepared by reacting: (a) a polymer selected from the group consisting of polyacrylamide, polymethacrylamide and copolymers of acrylamide and methacrylamide; (b) a secondary amine; and, (c) formaldehyde; comprising:
adjusting the pH of said Mannich polymer flocculant to less than 4.5 by the rapid addition of an acid component.

13. A method of employing aminomethylated polyacrylamides for the treatment of waters having one or more contaminants selected from the group consisting of: a) high pH materials; b) materials having high alkalinity; c) materials having high percent volatiles; and, d) materials having a high percentage of aerobically digested sludge; said method comprising:
adjusting the pH of said Mannich polymer flocculant to less than 4.5 by the rapid addition of an acid component.

14. The method of claim 11,12 or 13 wherein said acid component comprises:
   i) an amount of organic acid which is substantially stoichiometrically equivalent to the tertiary aminoalkyl groups in said Mannich polymer; and
   ii) an amount of mineral acid which is sufficient, in combination with said organic acid, to adjust the pH of said flocculant to less than 4.5.

15. The method of any one of the preceding claims, wherein said Mannich polymer comprises between about 2% and about 20% of said aqueous solution.

16. Use, for enhancing performance and/or stabilising against crosslinking and/or reversion an aqueous tertiary aminoalkyl group containing Mannich polymer flocculant, of an acid component in an amount capable of adjusting the pH of said Mannich polymer flocculant to less than 4.5.

17. Use of a compound of the formula:
RM or $R_2M$
where R is methyl, ethyl, propyl or butyl, and M is selected from the group consisting of sulfate, sulfite, chloride, bromide, iodide, nitrate, nitrite and carbonate, for stabilising an aqueous, tertiary aminoalkyl group containing Mannich polymer flocculant.

FIG. 1

DRAINAGE MLS/30 SEC.

POLYMER SOLIDS REQUIREMENT

EP 0 405 712 A2

FIG-2-

FIG-3